# EUROPÄISCHE PATENTSCHRIFT

(11) **EP 3 470 809 B1**
(45) Veröffentlichungstag und Bekanntmachung des Hinweises auf die Patenterteilung: **15.07.2020**
(21) Anmeldenummer: 18199222.3
(22) Anmeldetag: 09.10.2018
(51) Int. Cl.: G01L 9/00, B29C 45/37, B29C 45/77, B22D 17/32

(54) **DRUCKSENSOR FÜR EIN METALL- ODER KUNSTSTOFFVERARBEITUNGSWERKZEUG**
PRESSURE SENSOR FOR A METAL OR PLASTICS PROCESSING TOOL
CAPTEUR DE PRESSION POUR UN OUTIL DE TRAITEMENT DES MÉTAUX OU DES MATIÈRES PLASTIQUES

(30) Priorität: 16.10.2017 EP 17196594
(43) Veröffentlichungstag der Anmeldung: 17.04.2019
(73) Patentinhaber: Kistler Holding AG, 8408 Winterthur (CH)
(72) Erfinder: Hatt, Tanja, 8409 Winterthur (CH)

(56) Entgegenhaltungen:
- DE-B3-102009 027 108
- US-A- 4 059 999
- HUANG J-T ET AL: "Study of injection molding pressure sensor with low cost and small probe", SENSORS AND ACTUATORS A: PHYS, ELSEVIER BV, NL, Bd. 101, Nr. 3, 30. Oktober 2002 (2002-10-30), Seiten 269-274, XP004386737, ISSN: 0924-4247, DOI: 10.1016/S0924-4247(02)00217-0

## Beschreibung

### Technisches Gebiet

Die Erfindung betrifft einen Drucksensor für ein Werkzeug zur Metall- oder Kunststoffverarbeitung nach dem Oberbegriff des unabhängigen Anspruchs. Die Erfindung betrifft auch ein Werkzeug zur Metall- oder Kunststoffverarbeitung. Des Weiteren betrifft die Erfindung ein Verfahren zum Retrofit eines Werkzeugs zur Metall- oder Kunststoffverarbeitung. Zudem betrifft die Erfindung eine Verwendung des erfindungsgemässen Drucksensors.

### Stand der Technik

Drucksensoren sind bekannt und werden vielfältig eingesetzt. Ein Anwendungsgebiet für Drucksensoren betrifft die Metall- und Kunststoffverarbeitung. So werden in Werkzeugen zur Metall- und Kunststoffverarbeitung Drucksensoren eingesetzt, um beispielsweise während des Spritzgiessens den Druck in dem von dem Werkzeug eingeschlossenen Raum messen zu können. Der gemessene Druck wird genutzt, um den Prozess des Spritzgiessens zu regeln und zu optimieren. Damit wird die Qualität der auf diese Weise hergestellten Spritzgiessprodukte verbessert. Ein dafür geeigneter Drucksensor ist beispielsweise aus der CH573592A1 bekannt. Dabei handelt es sich um einen Drucksensor mit einem zylinderförmigen Messelement, das direkt hinter einem Druckkolben platziert ist. Das Messelement kann passiv oder aktiv sein und nach einem piezoelektrischen, piezoresistiven, induktive oder kapazitiven Messverfahren arbeiten. Der Drucksensor wird in eine Bohrung des Werkzeugs gesteckt und ein Gehäusekörper des Drucksensors wird mittels Montageschrauben längs auf eine Anschlagsfläche des Werkzeugs gepresst. Der im Raum des Werkzeugs zu messende Druck wirkt auf den Druckkolben und wird vom Messelement als Kraft erfasst. Solche zum Stand der Technik gehörenden Drucksensoren werden im Folgenden als konventionelle Drucksensoren bezeichnet.

Ebenfalls sind Datumsuhren, auch Kennzeichnungsstempel genannt, in der Metall- und Kunststoffverarbeitung bekannt. Mit ihrer Hilfe lässt sich ein Datumsstempel beim Spritzgiessen auf dem Spritzgiessprodukt anbringen. Auf diese Weise können Spritzgiessprodukte zurückverfolgt werden, in dem zum Beispiel auf eine bestimmte Charge geschlossen werden kann. Bei vielen Kunststoffprodukten, wie beispielsweise Dokumentationspflichtteile und Sicherheitsteile, ist der Einbau einer Datumsuhr zwingend vorgeschrieben. Eine solche Datumsuhr ist beispielsweise in der WO2010149417A1 offenbart. Eine äussere Hülse weist auf deren Stirnfläche Markierungen auf, wie beispielsweise die Ziffern der zwölf Monate. Ein drehbares Stellelement, das von der Hülse umgeben wird, weist ebenfalls Markierungen auf, beispielsweise einen Pfeil und die Jahreszahl. Durch Verdrehen des Stellelements gegenüber der Hülse können damit beliebige Datumsstempel erzeugt werden. Datumsuhren werden üblicherweise ebenfalls in einer Bohrung, die sich im Werkzeug befindet, befestigt. Solche zum Stand der Technik gehörenden Datumsuhren werden im Folgenden als konventionelle Datumsuhren bezeichnet. Weiterer Stand der Technik bzgl. Drucksensoren und Markierungsvorrichtungen ist aus US 4, 059, 999 und DE 10 2009 027 108 bekannt.

Nicht selten ist der Einbauraum für Drucksensoren und Datumsuhren im Werkzeug zur Metall-und Kunststoffverarbeitung so beschränkt, dass entweder ein Drucksensor oder eine Datumsuhr, aber nicht beides zusammen eingebaut werden kann. Muss daher auf einen Drucksensor verzichtet werden, kann die Qualität des Spritzgiessprodukts darunter leiden. Muss auf eine Datumsuhr verzichtet werden, können keine dokumentationspflichtigen Teile oder Sicherheitsteile hergestellt werden.

### Darstellung der Erfindung

Aufgabe der Erfindung ist es daher, geeignete Vorrichtungen und Verfahren bereitzustellen, die auch in kleinen Werkzeugen, oder in Werkzeugen mit beschränktem Einbauplatz, in möglichst platzsparender und vorteilhafter Art und Weise sowohl eine Druckmessung als auch eine Datumsstempelung ermöglichen.

Die Lösung der Aufgabe ist durch die Merkmale des Anspruchs 1 definiert.

Der erfindungsgemässe Drucksensor ist platzsparend, weil er in nur eine einzige Ausnehmung oder Bohrung in dem Werkzeug zur Metall- oder Kunststoffverarbeitung eingebaut werden kann. Ausserdem ist der Einbau des erfindungsgemässen Drucksensors in ein Werkzeug zeitsparend, kostensparend und einfacher, weil nur eine einzige Bohrung im Werkzeug erstellt werden muss. Ein erfindungsgemässer Drucksensor ist auch geeignet für den Retrofit von Werkzeugen, in die bisher nur ein konventioneller Drucksensor oder eine konventionelle Datumsuhr eingebaut waren, d.h. die Werkzeuge verfügen bereits über eine Bohrung, in die nun der erfindungsgemässe Drucksensor eingebracht werden kann, der sowohl eine Druckmessung als auch eine Datumsstempelung ermöglicht. Zudem vereinfacht sich die Lagerhaltung, weil nur noch ein einziges Teil, namentlich der erfindungsgemässe Drucksensor vorgehalten werden muss und nicht mehr zwei verschieden Teile, nämlich ein konventioneller Drucksensor und ein Datumsstempel.

Die erfindungsgemässe Lösung stellt einen völlig neuen Ansatz dar, weil die Lösung nicht auf einer Verkleinerung des Drucksensors durch einen Drucksensorhersteller und/oder einer Verkleinerung der Datumsuhr durch einen Hersteller von Datumsuhren beruht, sondern auf einer Integration einer Datumsuhr in einen Drucksensor.

Unter einem Werkzeug zur Metall- oder Kunststoffverarbeitung ist insbesondere eine Form zu verstehen, in der ein Spritzgiessprodukt hergestellt werden kann.

Das Sensorgehäuse umschliesst zumindest den konventionellen Teil des erfindungsgemässen Drucksensors. Der konventionelle Teil des erfindungsgemässen Drucksensors betrifft die Druckmessung. Das Sensorgehäuse eines konventionellen Drucksensors weist eine Messfläche auf. Im Betrieb des erfindungsgemässen Drucksensors ist diese Messfläche des konventionellen Drucksensors "direkt" oder "indirekt" dem zu messenden Druck ausgesetzt. Der zu messende Druck wirkt "direkt" oder "indirekt" auf die Messfläche. Dabei bedeutet "direkt", dass die Messfläche eines konventionellen Drucksensors mit dem Medium, dessen Druck zu messen ist, in Berührung kommt. "Indirekt" bedeutet, dass sich zwischen der Messfläche eines konventionellen Drucksensors und dem Medium, dessen Druck gemessen werden soll, noch ein druckübertragendes Element befindet, das einerseits mit dem Medium und andererseits mit der Messfläche des konventionellen Drucksensors in Berührung kommt, so dass die Messfläche des konventionellen Drucksensors in diesem "indirekten" Fall selbst nicht mit dem Medium, dessen Druck gemessen werden soll, in Berührung kommt.

Als Druckaufnehmer kann jeder handelsübliche konventionelle Druckaufnehmer verwendet werden, wie beispielsweise ein piezoelektrischer, piezoresistiver, induktiver, kapazitiver und/oder potentiometrischer Druckaufnehmer, und/oder ein Druckaufnehmer mit Dehnmesstreifen. Der Druckaufnehmer erfasst den auf die Messfläche wirkenden Druck als Kraft.

Der erfindungsgemässe Drucksensor, der ja aus einer Integration einer Datumsuhr in einen konventionellen Drucksensor bestehen kann, kommt mit dem Medium, dessen Druck gemessen werden soll, in Berührung, Diese Berührungsfläche wird als Stirnfläche bezeichnet. Die Stirnfläche wird in verschiedene Bereiche unterteilt, und zwar zumindest in eine erste Stirnfläche und eine zweite Stirnfläche. Es ist möglich, dass die erste Stirnfläche und die zweite Stirnfläche zusammen die gesamte Stirnfläche des erfindungsgemässen Drucksensors ausmachen: Dies hat den Vorteil, dass die gesamte Stirnfläche für abbildbare Markierungen zur Verfügung steht. Es ist aber genauso möglich, dass die erste Stirnfläche und die zweite Stirnfläche zusammen weniger als die gesamte Stirnfläche ausmachen. Dies kann der Fall sein, wenn die Messfläche des Sensorgehäuses, wie oben erwähnt, direkt mit dem Medium, dessen Druck gemessen werden soll, in Berührung kommt, und wenn diese Messfläche nicht mit der ersten Stirnfläche oder der zweiten Stirnfläche identisch ist, das heisst, wenn die Messfläche keine abformbare Markierung aufweist. Ausserdem ist es möglich, eine oder mehrere weitere Stirnflächen mit einer oder mehreren weiteren abformbaren Markierungen vorzusehen, wobei die eine oder mehreren weiteren Stirnflächen gegeneinander und/oder gegenüber der ersten Stirnfläche und/oder gegenüber der zweiten Stirnfläche verstellbar sind.

Die erste abformbare Markierung und die zweite abformbare Markierung umfassen vorteilhafterweise ein oder mehrere alphanummerische Zeichen und/oder ein oder mehrere Zeiger, wie beispielsweise ein oder mehrere Pfeile. Die abformbaren Markierungen können durch Vertiefungen und/oder Erhöhungen gegenüber einer Grundfläche gebildet werden. Die abformbaren Markierungen können beim Blick auf die Stirnfläche des erfindungsgemässen Drucksensors spiegelverkehrt erscheinen.

Dadurch, dass die erste Stirnfläche und die zweite Stirnfläche gegeneinander verdrehbar sind, können die erste abformbare Markierung und die zweite abformbare Markierung eine Vielzahl unterschiedlicher Positionen zueinander einnehmen. Jede Position der ersten abformbaren Markierung relativ zur Position der zweiten abformbaren Markierung hat eine bestimmte abformbare Gesamtmarkierung zur Folge, die sich von den anderen abformbaren Gesamtmarkierungen bei anderen Positionen unterscheidet. Daher kann mit ein und demselben erfindungsgemässen Drucksensor durch Verstellen der ersten Stirnfläche gegenüber der zweiten Stirnfläche eine Vielzahl verschiedener abformbarer Gesamtmarkierungen erzeugt werden, die auf den Spritzgiessprodukten dann zu verschiedene Abbildungen führen. Die Bedeutung der verschiedenen Abbildungen, die durch die verschiedenen abformbaren Gesamtmarkierungen erzeugbar sind, kann beispielsweise ein Datum und/oder eine Chargennummer sein.

Die erste Stirnfläche und die zweite Stirnfläche sind so gegeneinander verdrehbar, dass vorgegebene Positionen bevorzugt eingenommen werden. Dies kann durch geeignet angeordnete Rastelemente erreicht werden.

Die Verstellung kann manuell erfolgen, beispielsweise mit einem Verstellwerkzeug, das in eine Vertiefung einer abformbaren Markierung eingreift und damit eine Kraftausübung auf die zugehörige Stirnfläche gestattet, was wiederrum zu einer Verstellung der entsprechenden Stirnfläche führt. Die Richtung der Kraft zum Verstellen einer Stirnfläche kann in einer Ebene parallel zur Stirnfläche sein. Die Verstellung kann auch durch aufbringen eines Drehmomentes um die Längsachse des erfindungsgemässen Drucksensors erfolgen, wodurch ein Rotieren der Stirnfläche um besagte Längsachse erreicht wird.

In einer bevorzugten Ausführungsform ist die erste Stirnfläche in Wirkverbindung mit dem Druckaufnehmer.

Der Vorteil dieser Ausführungsform besteht darin, dass der auf die erste Stirnfläche wirkende Druck auf die Messfläche des Sensorgehäuses, in der sich der Druckaufnehmer befindet, übertragen wird. Im Betrieb des Drucksensors dient die erste Stirnfläche auf Grund der sich auf ihr befindenden ersten abformbaren Markierung also sowohl zum Aufbringen einer Abbildung auf das Spritzgiessprodukt als auch zum Erfassen des Druckes beim Spritzgiessen.

Wenn die erste Stirnfläche nicht die Messfläche bildet, sind die erste Stirnfläche und die Messfläche hintereinander angeordnet, das heisst, dass vom Medium her gesehen, dessen Druck gemessen werden soll, zunächst die erste Stirnfläche kommt und dahinter die Messfläche.

Bei einer sehr kleinen Messfläche kann es auch vorteilhaft sein, dass diese direkt mit dem Medium, dessen Druck gemessen werden soll, in Berührung kommt, ohne dass sich eine erste abformbare Markierung oder eine zweite abformbare Markierung darauf befinden, das heisst, dass weder die erste Stirnfläche noch die zweite Stirnfläche zwingend mit dem Druckaufnehmer in Wirkverbindung stehen muss.

In einer weiteren bevorzugten Ausführungsform umgibt die zweite Stirnfläche die erste Stirnfläche vollständig.

Diese Ausführungsform ist insbesondere dann vorteilhaft, wenn beispielsweise die erste Stirnfläche einen Zeiger oder Pfeil als erste abformbare Markierung aufweist, der dann je nach Position der ersten Stirnfläche relativ zur zweiten Stirnfläche auf einen bestimmten Teil der zweiten abformbaren Markierung zeigt.

Die erste Stirnfläche kann kreisförmig sein. Die zweite Stirnfläche kann ein kreisförmiges Loch aufweisen, in der sich die erste Stirnfläche befindet. Die erste Stirnfläche kann das Loch der zweiten Stirnfläche lückenlos ausfüllen.

Die erste Stirnfläche kann auch die Form eines Vielecks haben, wie zum Beispiel eines Vierecks, Sechsecks oder Zwölfecks. Die zweite Stirnfläche kann ein entsprechendes Loch aufweisen, so dass die erste Stirnfläche wiederum das Loch der Zweiten Stirnfläche lückenlos ausfüllt.

Es ist aber auch durchaus möglich, dass die zweite Stirnfläche die erste Stirnfläche nur teilweise umgibt.

In einer weiteren bevorzugten Ausführungsform liegen die erste Stirnfläche und die zweite Stirnfläche im Wesentlichen in einer gemeinsamen Ebene.

Dadurch wird beim Spritzgiessen eine möglichst ebene Abbildung der ersten abformbaren Markierung und der zweiten abformbaren Markierung auf dem Spritzgiessteil erzielt. Eine unnötige Dicke des Spritzgiessteils wird vermieden.

Es ist aber auch möglich, dass die erste Stirnfläche und die zweite Stirnfläche in zwei parallelen, aber beabstandeten Ebenen liegen. In diesem Fall kann beispielsweise die erste Stirnfläche hervorstehen und an ihrer seitlichen Begrenzungswand kann ein Vorsprung sein, der auf einen Teil der zweiten abformbaren Markierung zeigt, wobei der Vorsprung die zweite Stirnfläche überlappen kann.

Wenn die erste Stirnfläche und die zweite Stirnfläche in einer gemeinsamen Ebene liegen, können die erste Stirnfläche und die zweite Stirnfläche überlappungsfrei sein.

Erfindungsgemäß ist die zweite Stirnfläche mit der zweiten abformbaren Markierung auf einer Hülse angeordnet.

Die Hülse ist insbesondere röhrenförmig und hat einen Innendurchmesser, der gleich oder grösser als der Aussendurchmesser des Sensorgehäuses im Bereich der Messfläche ist. Daher erlaubt die Hülse die Verwendung bestehender konventioneller Drucksensoren, über deren Sensorgehäuse von der Messfläche her die Hülse mit der zweiten abformbaren Markierung aufgebracht werden kann. Dabei reicht es aus, dass die Hülse bereichsweise am Sensorgehäuse angeordnet ist.

Als Hülse kann auch ein Vielkanthohlprofil verwendet werden, beispielsweise ein Vierkant-, Sechskant- oder Zwölfkanthohlprofil. Unter einem Vielkanthohlprofil soll ein Körper mit einer länglichen Ausdehnung verstanden werden, der innen hohl ist, und der im Querschnitt senkrecht zu seiner Längsachse ein Vieleck als innere und äussere Begrenzungslinie aufweist.

Ein Vielkanthohlprofil hat gegenüber einer (runden) Hülse den Vorteil, dass vorbestimmte Positionen zwischen der zweiten abformbaren Markierung gegenüber der ersten abformbaren Markierung, die sich innerhalb oder ausserhalb des Vielkanthohlprofils befinden kann, möglich sind.

In einer weiteren bevorzugten Ausführungsform liegt die Hülse am Sensorgehäuse an.

Dabei sind die Hülse und das Sensorgehäuse konzentrisch angeordnet. Dadurch kann eine besonders platzsparende Bauweise des erfindungsgemässen Drucksensors erreicht werden.

Alternativ kann zwischen der Hülse mit der zweiten abformbaren Markierung und dem Sensorgehäuse ein Abstand bestehen. Solche Hülsen können durch eine Drehung einfach gegeneinander verstellt werden.

In einer weiteren bevorzugten Ausführungsform ist die Hülse mit dem Sensorgehäuse fest verbunden.

Diese Ausführungsform lässt sich besonders einfach herstellen.

Die Hülse kann auf jede bekannte Weise fest mit dem Sensorgehäuse verbunden werden, wie beispielsweise durch Aufpressen, Aufschrauben, Löten, Schweissen und/oder Kleben.

Wie schon zuvor erwähnt, ist es jedoch nicht zwingend, dass die Hülse mit dem Sensorgehäuse fest verbunden ist. Die Hülse kann auch beweglich am Sensorgehäuse anliegen oder sogar beabstandet sein.

Erfindungsgemäß ist die erste Stirnfläche auf einem Verstellelement angeordnet, so dass die erste Stirnfläche gegenüber dem Sensorgehäuse verdrehbar ist.

Dabei kann das Verstellelement in Form eines druckübertragenden Elements ausgeführt sein, dass sich in Kontakt mit der Messfläche des Sensorgehäuses befindet.

In einer weiteren bevorzugten Ausführungsform ist die Hülse mit dem Sensorgehäuse fest verbunden und die erste Stirnfläche ist auf einem Verstellelement angeordnet, so dass die erste Stirnfläche gegenüber dem Sensorgehäuse verdrehbar ist.

So kann auf besonders einfache Art und Weise die Verstellung der Stirnflächen gegeneinander realisiert werden, und es können vorhandene konventionelle Drucksensoren ohne Umkonstruktion verwendet werden.

Erfindungsgemäß umgibt die Hülse das Verstellelement.

Diese Ausführungsform ist besonders platzsparend.

In einer weiteren bevorzugten Ausführungsform ist die erste Stirnfläche fest mit dem Sensorgehäuse verbunden.

Auch diese Ausführungsform lässt sich einfach herstellen.

Die Erfindung betrifft des Weiteren ein Werkzeug zur Metall- oder Kunststoffverarbeitung. An dem Werkzeug ist ein erfindungsgemässer Drucksensor angeordnet.

Mit einem solchen Werkzeug können Spritzgiessprodukte hergestellt werden, die eine gute Qualität und beispielsweise eine Datumsstempelung haben, auch wenn der Einbauplatz im Werkzeug nicht reicht, um einen konventionellen Drucksensor und eine konventionelle Datumsuhr in das Werkzeug einzubauen.

Der erfindungsgemässe Drucksensor kann in eine Ausnehmung, und insbesondere in eine Bohrung, die sich im Werkzeug befindet, eingesetzt werden. Der erfindungsgemässe Drucksensor kann fest oder verstellbar mit dem Werkzeug verbunden werden. Der Drucksensor kann formschlüssig und/oder kraftschlüssig mit dem Werkzeug verbunden sein. So kann der Drucksensor über Längsanschlag oder eine Schraubverbindung mit dem Werkzeug verbunden sein.

In einer weiteren bevorzugten Ausführungsform ist das in das Werkzeug eingebaute Sensorgehäuse gegenüber dem Werkzeug verstellbar, insbesondere verdrehbar.

Dadurch lässt sich eine besonders einfache Konstruktion des Werkzeuges erreichen. Beispielsweise kann die Messfläche mit einer ersten abformbaren Markierung versehen werden, so dass die Messfläche gleichzeitig die erste Stirnfläche bildet. Da die erste Stirnfläche somit gegenüber dem Werkzeug verstellt werden kann, insbesondere verdreht werden kann, kann die zweite Stirnfläche mit der zweiten abformbaren Markierung fest mit dem Werkzeug verbunden sein, ohne dass damit die Verstellbarkeit von der ersten Stirnfläche gegenüber der zweiten Stirnfläche beeinträchtigt würde.

Die Erfindung betrifft auch ein Verfahren für die Herstellung oder den Retrofit eines Werkzeugs zur Metall- oder Kunststoffverarbeitung. Das Verfahren umfasst die Schritte Erstellen oder Freilegen einer Ausnehmung im Werkzeug und Montage eines erfindungsgemässen Drucksensors in der Ausnehmung im Werkzeug.

Bei der Ausnehmung kann es sich insbesondere um eine Bohrung handeln.

Das Verfahren bietet den Vorteil, auch bei Werkzeugen mit beschränktem Einbauplatz gleichzeitig eine Druckmessung und beispielsweise eine Datumsstempelung zu ermöglichen. Ein beschränkter Einbauplatz liegt beispielsweise dann vor, wenn kein Platz für zwei Ausnehmungen oder Bohrungen an verschiedenen Orten des Werkzeugs vorhanden ist.

Zudem sind Werkzeuge im Einsatz, die bereits über eine Datumsuhr verfügen, aber nicht über eine Druckmessung. Mit Hilfe des erfindungsgemässen Verfahrens kann die Datumsuhr aus dem Werkzeug entfernt und durch einen erfindungsgemässen Drucksensor ersetzt werden, ohne dass am Werkzeug Nachbearbeitungen erforderlich sind. Nachbearbeitungen wie das Anbringen einer weiteren Bohrung erfordern üblicherweise den Ausbau des Werkzeugs aus der Spritzgiessmaschine. Dies kann mit dem erfindungsgemässen Verfahren vermieden werden, wodurch die Down-Time der Spritzgiessmaschine minimiert wird.

Die Erfindung betrifft auch die Verwendung eines erfindungsgemässen Drucksensors bei der Herstellung eines Spritzgiessprodukts.

Dadurch kann die Qualität des Spritzgiessproduktes verbessert werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
- Fig. 1: Eine perspektivische Darstellung des erfindungsgemässen Drucksensors;
- Fig. 2: Einen Längsschnitt durch einen erfindungsgemässen Drucksensor;
- Fig. 3: Eine schematische Darstellung einer Ausführungsform des erfindungsgemässen Drucksensors;
- Fig. 4: Eine schematische Darstellung einer anderen Ausführungsform des erfindungsgemässen Drucksensors.

Grundsätzlich sind in den Figuren gleiche Teile mit gleichen Bezugszeichen versehen.

### Wege zur Ausführung der Erfindung

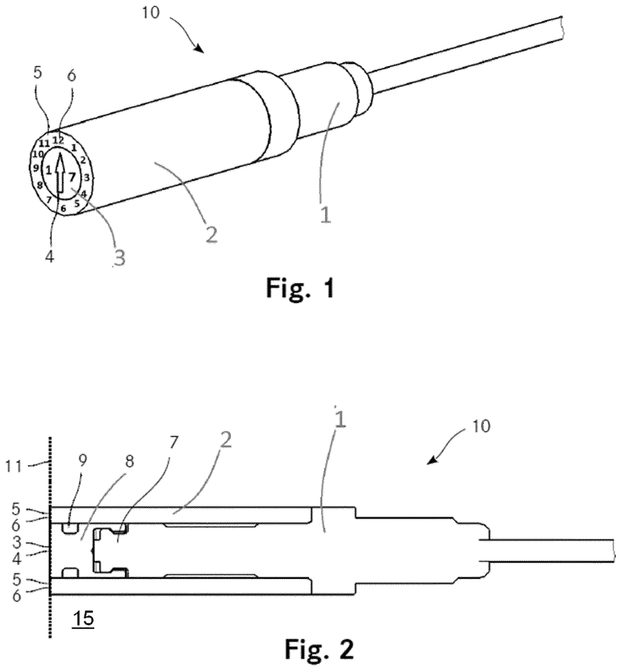

Fig. 1 zeigt eine perspektivische Darstellung des erfindungsgemässen Drucksensors 10. Der Drucksensor 10 weist ein Sensorgehäuse 1 und eine Hülse 2 auf. Die linke Seite des in Fig. 1 dargestellten Drucksensors 10 ist die dem zu messenden Druck zugewandte Seite. Die dem zu messenden Druck zugewandte Seite hat eine erste Stirnfläche 3, auf der eine erste abformbare Markierung 4 angeordnet ist. Die erste abformbare Markierung 4 weist eine pfeilförmige Nut und eine Jahreszahl, insbesondere deren beiden Endziffern auf. Zur einfacheren Darstellung sind die Ziffern der ersten abformbaren Markierung 4 nicht spiegelverkehrt dargestellt. In einem realen Drucksensor 10 ist die erste abformbare Markierung 4 spiegelverkehrt ausgebildet, damit die Abbildung auf dem Spritzgiessprodukt (nicht dargestellt) richtig herum erfolgt. Auf einer zweiten Stirnfläche 5, die auf der Hülse 2 angeordnet ist, befindet sich eine zweite abformbare Markierung 6. In diesem Ausführungsbeispiel sind als zweite abformbare Markierung 6 die Ziffern eins bis zwölf angebracht, was beispielsweise den zwölf Monaten entspricht. Wie schon die erste abformbare Markierung 4, ist auch die zweite abformbare Markierung 6 zur einfacheren Darstellung nicht spiegelverkehrt dargestellt. In einem realen Drucksensor 10 ist die zweite abformbare Markierung 6 spiegelverkehrt ausgebildet, damit die Abbildung auf dem Spritzgiessprodukt (nicht dargestellt) richtig herum erfolgt. Die erste Stirnfläche 3 und die zweite Stirnfläche 5 sind im Wesentlich in einer gemeinsamen Ebene angeordnet. Durch Verdrehen der ersten Stirnfläche 3 gegenüber der zweiten Stirnfläche 5 können die Positionen der ersten abformbaren Markierung 4 und der zweiten abformbaren Markierung 6 zueinander verändert werden. Der Pfeil der ersten abformbaren Markierung 4 kann durch Verdrehen der ersten Stirnfläche in jede gewünschte Richtung gebracht werden, insbesondere in eine Richtung, bei der der Pfeil auf die Ziffer der zweiten abformbaren Markierung zeigt 6, die dem aktuellen Monat entspricht, wie beispielsweise auf die zwölf. So kann beim Spritzgiessen auf dem Spritzgiessprodukt eine Abbildung angebracht werden, die dem Herstellungsmonat entspricht. Das Verdrehen der ersten Stirnfläche 3 gegenüber der zweiten Stirnfläche 5 kann mit einem Verstellwerkzeug (nicht dargestellt) erfolgen, wie beispielsweise mit einem Schraubendreher. Dabei greift eine keilförmige Spitze (nicht dargestellt) des Verstellwerkzeugs in die pfeilförmige Nut der ersten abformbaren Markierung 4 ein und kann durch Rotationsbewegung ein Verstellen, insbesondere ein Verdrehen der ersten Stirnfläche 3 gegenüber der zweiten Stirnfläche 5 bewirken, so dass eine gewünschte Abbildung am Spritzgiessprodukt erstellt werden kann. Natürlich ist es möglich, die erste Stirnfläche 3 aus dem Drucksensors 10 auszubauen und durch andere erste Stirnfläche 3 zu ersetzen, welche andere erste Stirnfläche 3 an Stelle der ausgebauten ersten Stirnfläche 3 in den Drucksensor 10 eingebaut wird. So kann eine erste Stirnfläche 3 mit einer ersten abformbaren Markierung 4 mit den Endziffern 1 und 7 als Jahreszahl durch eine andere erste Stirnfläche 3 mit einer anderen ersten abformbaren Markierung 4 mit den Endziffern 1 und 8 als Jahreszahl ersetzt werden. Ausbau der ersten Stirnfläche 3 sowie Einbau der anderen ersten Stirnfläche 3 erfolgt durch geeignete Werkzeuge.

Im vorliegenden Ausführungsbeispiel wurde ein handelsüblicher konventioneller Drucksensor vom Typ 6182C von der Firma Kistler verwendet. Auf Grund seiner Abmessungen, das heisst seines Sensorgehäuses 2, und seiner weiteren technischen Daten ist dieser Sensortyp besonders gut geeignet zum Bereitstellen des erfindungsgemässen Drucksensors.

Fig. 2 zeigt einen erfindungsgemässen Drucksensor 10 im Längsschnitt. Im Sensorgehäuse 1 ist ein Druckaufnehmer 7 angeordnet. Zwischen dem Druckaufnehmer 7 und dem Medium, dessen Druck gemessen werden soll, befindet sich ein Verstellelement 8. Die erste Stirnfläche 3 entspricht also der Fläche des Verstellelements 8, die dem Medium zugewandt ist, dessen Druck gemessen werden soll. Der Druckaufnehmer 7 und das Verstellelement 8 sind so miteinander verbunden, dass eine Druckübertragung vom Verstellelement 8 auf den Druckaufnehmer 7 erfolgt, das Verstellelement 8 und der Druckaufnehmer 7 sind also in Wirkverbindung. Fig. 2 zeigt des Weiteren eine umlaufende Ringnut 9 im Verstellelement 8. Diese Ringnut 9 kann der Aufnahme einer Dichtung (nicht gezeigt) dienen. Die Hülse 2 mit der auf der zweiten Stirnfläche 5 angeordneten zweiten abformbaren Markierung 6 liegt am Sensorgehäuse 1 aussenseitig an. Hülse 2 und Sensorgehäuse 1 sind konzentrisch angeordnet. Die erste Stirnfläche 3 und die zweite Stirnfläche 5 liegen im Wesentlichen in einer gemeinsamen Ebene 11. Das Verstellelement 8 wird von der Hülse 2 umgeben, und zwar in radialer Richtung vollständig. Der erfindungsgemässe Drucksensor 10 ist in eine einzige Bohrung eines Werkzeugs 15 zur Metall- und Kunststoffverarbeitung einbaubar. Der Einbau des erfindungsgemässen Drucksensors in das Werkzeug 15 und seine Befestigung daran kann auf konventionelle Art erfolgen, wie beim Sensortyp Typ 6182C von der Firma Kistler vorgesehen.

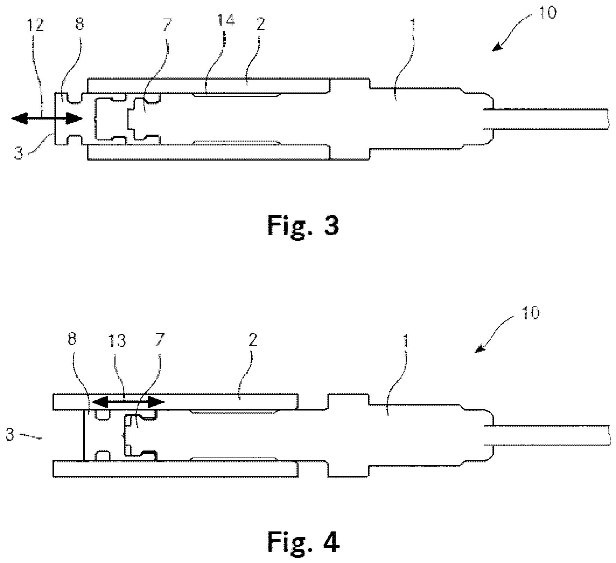

Die Figuren 3 und 4 zeigen schematisch zwei alternative Ausführungsformen des erfindungsgemässen Drucksensors 10. Dabei zeigt Fig. 3 eine Ausführungsform, bei der das Verstellelement 8 axial beweglich in der Hülse 2 angeordnet ist. Der erste Doppelpfeil 12 soll die Bewegung des Verstellelements 8 gegenüber der Hülse 2 schematisch darstellen. In der Praxis sind diese Bewegungen jedoch sehr klein. Auch sind in der Praxis, das heisst im normalen Betrieb des erfindungsgemässen Drucksensors 10, abweichend von der Darstellung in Fig. 3, die erste Stirnfläche 3 und die zweite Stirnflächen 5 im Wesentlichen in einer gemeinsamen Ebene angeordnet, und das Verstellelement 8 und der Druckaufnehmer 7 sind in mechanischem Kontakt, damit der zu messende Druck vom Verstellelement 8 auf den Druckaufnehmer 7 übertragen werden kann. Die Hülse 2 ist fest mit dem Sensorgehäuse verbunden. Die Hülse 2 kann beispielsweise über ein Gewinde 14 auf das Sensorgehäuse 1 aufgeschraubt werden. Das Verstellelement 8, oder zumindest ein Teil davon, ist nicht nur axial beweglich in der Hülse 2 angeordnet, sondern auch radial beweglich, so dass eine Rotation der ersten Stirnfläche 3 um eine gemeinsame Längsachse von Sensorgehäuse 1 und Hülse 2 möglich ist. Zwischen dem Verstellelement 8 und dem Sensorgehäuse 1 können Rastnasen (nicht gezeigt) angebracht sein, um das Verstellelement 8 in vorbestimmten Positionen gegenüber der Hülse 2 zu halten.

Fig. 4 zeigt schematisch eine andere Ausführungsform, bei der die Hülse 2 gegenüber dem Sensorgehäuse 1 axial beweglich ist. Dies wird durch den zweiten Doppelpfeil 13 angedeutet. Das Verstellelement 8 ist fest mit dem Druckaufnehmer 7 verbunden. Folglich ist die Hülse 2 auch gegenüber dem Verstellelement 8 axial beweglich. In der Praxis sind diese Bewegungen jedoch sehr klein. Auch sind in der Praxis, das heisst im normalen Betrieb des erfindungsgemässen Drucksensors 10, abweichend von der Darstellung in Fig. 4, die erste Stirnfläche 3 und die zweite Stirnflächen 5 im Wesentlichen in einer gemeinsamen Ebene angeordnet.

Zusammenfassend ist festzustellen, dass es eine Vielzahl von verschiedenen Ausführungsformen des erfindungsgemässen Drucksensors gibt. Der erfindungsgemässe Drucksensor ist sehr platzsparend, da er für den Einbau in ein Werkzeug 15 zur Metall- und Kunststoffverarbeitung nur eine Ausnehmung in dem Werkzeug 15 benötigt, aber dennoch zwei Funktionen bereitstellt, namentlich die Druckmessung und die Datumsstempelung.

Im Folgenden werden noch Beispiele, die nicht in den Schutzbereich der Ansprüche fallen, ohne Verstellelement 8 erwähnt. In diesem Fall kann sich die erste abformbare Markierung direkt auf der Messfläche, das heisst direkt auf der dem zu messenden Druck zugewandten Seite des Druckaufnehmers, befinden. Damit die erste Stirnfläche gegenüber der zweiten Stirnfläche verstellbar ist, kann die zweite Stirnfläche auf einer Hülse aufgebracht werden, die das Sensorgehäuse radial vollständig und axial bereichsweise umgibt, wobei die Hülse gegenüber dem Sensorgehäuse verdrehbar ist. Für Beispiele mit vorbestimmten Positionen der ersten Stirnfläche zur zweiten Stirnfläche können Rastvorrichtungen zwischen der Hülse und dem Sensorgehäuse vorgesehen sein, und zwar entweder an dem der zweiten Stirnseite gegenüberliegenden Ende der Hülse, oder an der Innenseite der Hülse, beispielsweise auf Höhe des in Fig. 3 eingezeichneten Gewindes 14, das bei den hier besprochenen Beispielen jedoch nicht vorhanden ist.

**Bezugszeichenliste**

| | |
|---|---|
| 1 | Sensorgehäuse |
| 2 | Hülse |
| 3 | Erste Stirnfläche |
| 4 | Erste abformbare Markierung |
| 5 | Zweite Stirnfläche |
| 6 | Zweite abformbare Markierung |
| 7 | Druckaufnehmer |
| 8 | Verstellelement |
| 9 | Ringnut |
| 10 | Drucksensor |
| 11 | Gemeinsame Ebene |
| 12 | Erster Doppelpfeil |
| 13 | Zweiter Doppelpfeil |
| 14 | Gewinde |
| 15 | Werkzeug |

## Patentansprüche

1. Drucksensor (10) für ein Werkzeug (15) zur Metall- oder Kunststoffverarbeitung, umfassend:
a) ein Sensorgehäuse (1), das mit dem Werkzeug (15) verbindbar ist,
b) einen Druckaufnehmer (7), der im Sensorgehäuse (1) angeordnet ist,
**dadurch gekennzeichnet, dass**
c) der Drucksensor eine erste Stirnfläche (3) mit einer ersten abformbare Markierung (4) aufweist,
d) der Drucksensor (10) zusätzlich eine zweite Stirnfläche (5) mit einer zweiten abformbaren Markierung (6) aufweist, wobei die zweite Stirnfläche (5) mit der zweiten abformbaren Markierung (6) auf einer Hülse (2) angeordnet ist, und
e) die erste Stirnfläche (3) und die zweite Stirnfläche (5) gegeneinander verstellbar sind; wobei die erste Stirnfläche (3) auf einem Verstellelement (8) angeordnet ist, so dass die erste Stirnfläche (3) gegenüber dem Sensorgehäuse (1) verdrehbar ist, wobei die Hülse (2) das Verstellelement (8) umgibt.

2. Drucksensor (10) gemäss Anspruch 1, wobei die erste Stirnfläche (3) in Wirkverbindung mit dem Druckaufnehmer (7) ist.

3. Drucksensor (10) gemäss einem der vorhergehenden Ansprüche, wobei die zweite Stirnfläche (5) die erste Stirnfläche (3) vollständig umgibt; und wobei die erste Stirnfläche (3) und die zweite Stirnfläche (5) im Wesentlichen in einer gemeinsamen Ebene (11) liegen.

4. Drucksensor (10) gemäss einem der vorhergehenden Ansprüche, **dadurch gekennzeichnet, dass** die Hülse (2) am Sensorgehäuse (1) anliegt.

5. Drucksensor (10) gemäss Anspruch 4, **dadurch gekennzeichnet, dass** die Hülse (2) mit dem Sensorgehäuse (1) fest verbunden ist.

6. Drucksensor (10) gemäss einem der vorgehenden Ansprüche, **dadurch gekennzeichnet, dass** die Hülse (2) mit dem Sensorgehäuse (1) fest verbunden ist.

7. Drucksensor (10) gemäss einem der Ansprüche 1 - 4, **dadurch gekennzeichnet, dass** die erste Stirnfläche (3) fest mit dem Sensorgehäuse (1) verbunden ist.

8. Werkzeug (15) zur Metall- oder Kunststoffverarbeitung, an dem ein Drucksensor (10) gemäss einem der vorhergehenden Ansprüche angeordnet ist.

9. Werkzeug (15) gemäss Anspruch 8, **dadurch gekennzeichnet, dass** das in das Werkzeug (15) eingebaute Sensorgehäuse (1) gegenüber dem Werkzeug (15) verstellbar, insbesondere verdrehbar, ist.

10. Verfahren für die Herstellung oder den Retrofit eines Werkzeugs (15) zur Metall- oder Kunststoffverarbeitung, umfassend die Schritte:
a) Erstellen oder Freilegen einer Ausnehmung im Werkzeug, (15) und
b) Montage eines Drucksensors (10) nach einem der Ansprüche 1 - 7 in der Ausnehmung im Werkzeug (15).

11. Verwendung eines Drucksensors (10) gemäss einem der Ansprüche 1 - 7 bei der Herstellung eines Spritzgiessprodukts.

## Claims

1. A pressure sensor (10) for a metal or plastics processing tool (15), comprising:
a) a sensor housing (1), that can be connected to the tool (15),
b) a pressure transducer (7) arranged within the sensor housing (1),
**characterised in that**
c) the pressure sensor comprises a first front face (3) with a first cast-compatible mark (4),
d) the pressure sensor (10) additionally comprises a second front face (5) with a second cast-compatible mark (6), wherein the second front face (5) with the second cast-compatible mark (6) is arranged on a bushing (2), and
e) the first front face (3) and the second front face (5) are adjustable against one another; wherein the first front face (3) is arranged on an adjustment element (8) so that the first front face (3) is rotatable relative to the sensor housing (1), wherein the bushing (2) surrounds the adjustment element (8).

2. The pressure sensor (10) according to claim 1, wherein the first front face (3) is operatively connected to the pressure transducer (7).

3. The pressure sensor (10) according to any of the foregoing claims, wherein the second front face (5) completely surrounds the first front face (3); and wherein the first front face (3) and the second front face (5) are substantially arranged in a common plane (11) .

4. The pressure sensor (10) according to any of the foregoing claims, **characterised in that** the bushing (2) is in contact with the sensor housing (1).

5. The pressure sensor (10) according to claim 4, **characterised in that** the bushing (2) is fixedly connected to the sensor housing (1).

6. The pressure sensor (10) according to any of the foregoing claims, **characterised in that** the bushing (2) is fixedly connected to the sensor housing (1).

7. The pressure sensor (10) according to any of the claims 1-4, **characterised in that** the first front face (3) is fixedly connected to the sensor housing (1).

8. A tool (15) for metal or plastics processing whereon a pressure sensor (10) according to any of the foregoing claims is arranged.

9. The tool (15) according to claim 8, **characterised in that** the sensor housing (1) installed into the tool (15) is adjustable, specifically rotatable, in relation to the tool (15).

10. A method for manufacturing or retrofitting a metal or plastics processing tool (15), comprising the steps of:
a) creating or exposing a recess within the tool (15), and
b) installing a pressure sensor (10) according to any of the claims 1-7 in the recess within the tool (15).

11. Using a pressure sensor (10) according to any of the claims 1-7 within the framework of manufacturing an injection-moulded product.

## Revendications

1. Capteur de pression (10) pour un outil de traitement de métal ou de plastique (15), comprenant:
a) un boîtier de capteur (1) qui peut être connecté à l'outil (15),
b) un transducteur de pression (7) disposé à l'intérieur du boîtier de capteur (1),
**caractérisé en ce que**
c) ledit capteur de pression présente une première face avant (3) avec une première marque compatible avec la coulée (4),
d) ledit capteur de pression (10) présente en outre une seconde face avant (5) avec une seconde marque compatible avec la coulée (6), dans lequel la seconde face avant (5) avec la seconde marque compatible avec la coulée (6) est disposée sur une douille (2), et
e) ladite première face avant (3) et ladite seconde face avant (5) sont réglables l'une contre l'autre; dans lequel la première face avant (3) est disposée sur un élément de réglage (8) de sorte que la première face avant (3) puisse tourner par rapport au boîtier de capteur (1), dans lequel la douille (2) entoure ledit élément de réglage (8).

2. Capteur de pression (10) selon la revendication 1, dans lequel la première face avant (3) est connectée fonctionnellement au transducteur de pression (7).

3. Capteur de pression (10) selon l'une quelconque des revendications précédentes, dans lequel la seconde face avant (5) entoure complètement la première face avant (3); et dans lequel la première face avant (3) et la seconde face avant (5) sont sensiblement disposées dans un plan commun (11).

4. Capteur de pression (10) selon l'une quelconque des revendications précédentes, **caractérisé en ce que** ladite douille (2) est en contact avec le boîtier de capteur (1) .

5. Capteur de pression (10) selon la revendication 4, **caractérisé en ce que** ladite douille (2) est reliée de manière fixe au boîtier de capteur (1).

6. Capteur de pression (10) selon l'une quelconque des revendications précédentes, **caractérisé en ce que** ladite douille (2) est reliée de manière fixe au boîtier de capteur (1).

7. Capteur de pression (10) selon l'une quelconque des revendications 1-4, **caractérisé en ce que** la première face avant (3) est reliée de manière fixe au boîtier de capteur (1).

8. Outil (15) pour le traitement des métaux ou des plastiques sur lequel est disposé un capteur de pression (10) selon l'une quelconque des revendications précédentes.

9. Outil (15) selon la revendication 8, **caractérisé en ce que** le boîtier de capteur (1) installé dans l'outil (15) est réglable, spécifiquement rotatif, par rapport à l'outil (15).

10. Procédé de fabrication ou de rééquipement d'un outil de traitement de métal ou de plastique (15), comprenant les étapes de:
a) créer ou exposer un évidement à l'intérieur de l'outil (15), et
b) installer un capteur de pression (10) selon l'une quelconque des revendications 1-7 dans l'évidement à l'intérieur de l'outil (15).

11. Utilisation d'un capteur de pression (10) selon l'une quelconque des revendications 1-7 dans le cadre de la fabrication d'un produit moulé par injection.
